(19) Europäisches Patentamt / European Patent Office / Office européen des brevets

(11) **EP 3 861 380 B1**

(12) **EUROPEAN PATENT SPECIFICATION**

(45) Date of publication and mention
of the grant of the patent:
**22.07.2026  Bulletin 2026/30**

(21) Application number: **19795301.1**

(22) Date of filing: **27.09.2019**

(51) International Patent Classification (IPC):
*G01V 5/00* *(2024.01)*

(52) Cooperative Patent Classification (CPC):
**G01V 5/224**

(86) International application number:
**PCT/GB2019/052745**

(87) International publication number:
**WO 2020/070474 (09.04.2020 Gazette 2020/15)**

(54) **DETERMINATON OF MATERIAL**

BESTIMMUNG VON MATERIAL

DÉTERMINATION D'UN MATÉRIAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **05.10.2018  GB 201816243**

(43) Date of publication of application:
**11.08.2021  Bulletin 2021/32**

(73) Proprietor: **Smiths Detection France S.A.S.
94400 Vitry-sur-Seine (FR)**

(72) Inventors:
• **MAITREJEAN, Serge
75020 Paris (FR)**
• **PERROT, Yann
94400 Vitry-sur-Seine (FR)**

(74) Representative: **Vienne, Aymeric Charles Emile
Mathys & Squire
The Shard
32 London Bridge Street
London SE1 9SG (GB)**

(56) References cited:
WO-A1-2017/192597     US-A1- 2017 023 697
US-A1- 2017 336 526

## Description

### Field of Invention

The disclosure relates but is not limited to a method for inspecting cargo with X-rays. The disclosure also relates but is not limited to a corresponding apparatus and a corresponding computer product or a computer program.

### Background

Cargo inspection may use High Energy Material Discrimination (HEMD) to extract information about atomic composition of the cargo. HEMD is based on interpretation of pair creation effect and Compton scatter. The pair creation effect and the Compton scatter are indeed both material dependent (due to the effective number Z of the material and the atomic mass number) and energy dependent. Cargo inspection at two distinct energies (e.g. High Energy - HE and Low Energy - LE) may thus enable to identify cargo materials.

However material identification may be difficult for either low or large thicknesses of materials in the cargo, or when the cargo comprises objects which overlap each other.

US2017/0336526 discloses an X-ray backscatter inspection system.

US2017/0023697 discloses methods and devices for estimating weight of an object to be inspected in an inspection system.

WO2017/192597 discloses a radiation signal processing system.

### Summary of Invention

Aspects and embodiments of the invention are set out in the appended claims. These and other aspects and embodiments of the invention are also described herein.

### Brief Description of Drawings

Embodiments of the present disclosure will now be described, by way of example, with reference to the accompanying drawings, in which:

Figure 1 shows a flow chart illustrating an example method according to the wording of the claims;
Figure 2 schematically illustrates an example system configured to implement, at least partly, example methods of the disclosure;
Figure 3 shows a flow chart illustrating an example method according to the disclosure;
Figure 4A shows graphs illustrating example differences (for three materials namely iron, aluminium and poly(methyl methacrylate) (PMMA) of the brand Plexiglas) between steel mass equivalence at high energy and steel mass equivalence at low energy, as a function of steel mass equivalence at high energy;
Figure 4B shows graphs illustrating example differences (for several materials) between steel mass equivalence at high energy and steel mass equivalence at low energy, as a function of an average of steel mass equivalence $(MEQ_{HE} + MEQ_{LE})/2$;
Figure 5A shows an example of steel mass equivalence image of a container at high energy $(MEQ_{HE})$;
Figure 5B shows an example of steel mass equivalence image Icorr, such that $(MEQ_{HE} - MEQ_{LE})$;
Figure 6A shows a flow chart illustrating an example method according to the disclosure;
Figure 6B schematically illustrates a principle of material subtraction using MEQ graphs of Figure 4A, where a material of Object 2 is approximated by subtracting, in two dimensions, 15g/cm$^2$ of steel to an overlap of 30g/cm$^2$ of PMMA of the brand Plexiglas plus 15g/cm$^2$ of steel;
Figure 7A schematically illustrates an example of steel mass equivalence image, such that $(MEQ_{HE} - MEQ_{LE})$; and
Figure 7B shows an example of steel mass equivalence image, such that $(MEQ_{HE} + MEQ_{LE})/2$.

In the figures, similar elements bear identical reference numbers.

### Specific Description of Example Embodiments

#### Overview

Embodiments of the disclosure provide a method for determining a material in a cargo. Mass equivalence of at least some of the materials in the cargo may be obtained. The obtained mass equivalence of the materials may be expressed with respect to a reference material, and depends on radiation energy. By obtaining the mass equivalence for at least two levels of radiation energy, at least some of the materials in the cargo may be obtained.

In some examples, the obtained mass equivalence may be represented using at least one parameter associated with a difference between the mass equivalence at a higher radiation energy level and the mass equivalence at a lower radiation energy level. In some examples, the parameter may be represented as a function of the mass equivalence at the higher radiation energy level and/or as a function of an average of the mass equivalence at the higher radiation energy level and the mass equivalence at the lower radiation energy level. The representation of the parameter may enable simple approximation of materials in the cargo.

Alternatively or additionally, in some examples, at least one of the materials of the cargo may be used as a reference material for the mass equivalence, and observation data may be represented using a difference between the mass equivalence at a higher radiation energy level and the mass equivalence at a lower radiation energy level.

Embodiments of the disclosure may enable material identification even for low and/or large thicknesses of materials in the cargo, and even when the cargo comprises objects which overlap each other.

Details Description of Example Embodiments

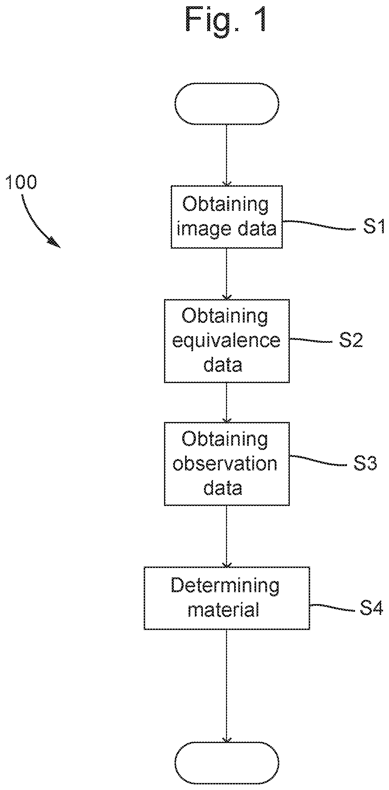

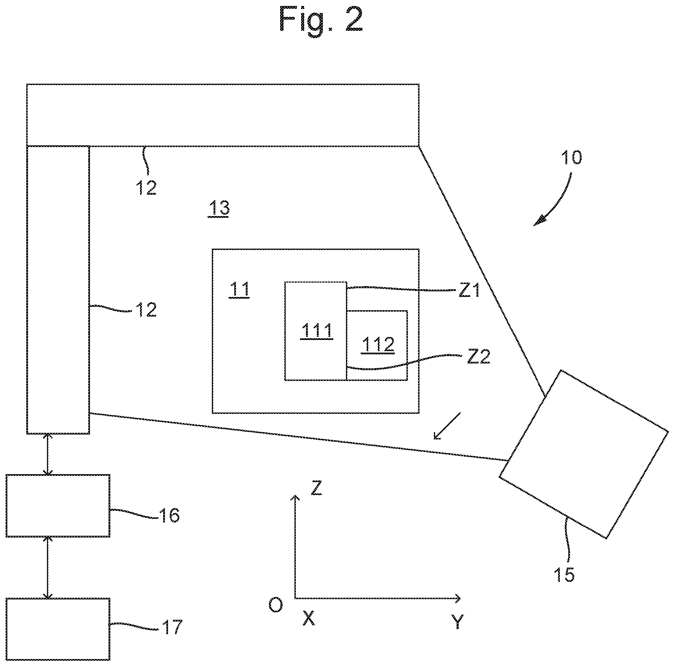

Figure 1 shows a flow chart illustrating an example method 100 for determining a material in a cargo 11, according to the disclosure. The method 100 is illustrated in Figure 1 in connection with Figure 2, which shows an inspection system 10 for inspection of the cargo **11** with radiation 13 comprising X-rays. The system 10 may be used to perform, at least partly, the method 100 and other methods of the disclosure. In the example illustrated in Figure 2, the system 10 comprises, amongst other conventional electrical elements, a radiation detector array 12, such as an X-ray detector array comprising detectors configured to generate, at least partly, an inspection image of the cargo 11. The cargo 11 may comprise a first object 111 made of a first material and a second object 112 made of a second material.

The method of Figure 1 mainly comprises:

> obtaining, at S1, image data associated with an inspection image of the cargo 11, for at least two levels of radiation energy (e.g. 6MeV and 4 MeV, as non-limiting examples);
> obtaining, at S2, equivalence data associated with mass equivalence of at least one of the first material and the second material with respect to a reference material, for the at least two levels of radiation energy;
> obtaining, at S3, observation data based on the image data and the equivalence data; and
> determining, at S4, at least one of the first material and the second material, based on the obtained observation data.

It should be understood that the mass equivalence of any given material (such as the first material and/or the second material, as non-limiting examples), with respect to the reference material corresponds to a thickness of an object made of the reference material, associated with a same radiation transmission, in the inspection image, as a radiation transmission associated with a thickness of an object made of the given material. For an object made of a material other than the reference material, the mass equivalence with respect to the reference material depends on radiation energy. The mass equivalence is expressed in g.cm$^{-2}$.

In some examples, the reference material may be metallic. In such examples, the mass equivalence MEQ to the reference material may be associated with metallic MEQ, such as iron MEQ, steel MEQ, lead MEQ or aluminium MEQ. In some examples, the reference material may be organic. In such examples, the mass equivalence MEQ to the reference material may be associated with organic MEQ, such as poly(methyl methacrylate) MEQ.

The radiation 13 may be generated by an X-ray source 15, which may be, in some examples, rigidly connected to the array 12. The source 15 may be moved with the array 12.

In the example illustrated in Figure 2, the inspection system 10 may be mobile and may be transported from a location to another location (the system 10 may comprise an automotive vehicle). Alternatively or additionally, the inspection system may be static with respect to the ground and cannot be displaced.

As explained in further detail below in relation to Figure 2, the inspection system 10 is configured to inspect the cargo 11. The inspection is performed by transmission of inspection radiation 13 from the inspection radiation source 15 to the array 12 through the cargo 11.

In the example illustrated by Figure 2, the system 10 may further comprise a controller 16, configured to communicate, via a communication network which may be wired and/or may be wireless, with the array 12 to generate, at least partly, one or more images from data received from the array 12. The controller 16 comprises at least a processor and a memory in order to perform, at least partly, example methods according to the disclosure, e.g. locally on the system 10.

In the example illustrated by Figure 2, the system 10 may further comprise an analyser 17 configured to receive one or more images from the controller 16, for example over a communication network which may be wired and/or may be wireless. The analyser 17 comprises at least a processor and a memory in order to perform, at least partly, example methods according to the disclosure, e.g. remotely from the system 10.

In some examples, obtaining, at S1, the image data may comprise obtaining data associated with the inspection image of the cargo 11 from the detectors and/or from the controller 16 and/or from the analyser 17.

In some examples, obtaining, at S2, the equivalence data may comprise at least one of receiving the equivalence data from a calibration step and determining the equivalence data during a calibration step.

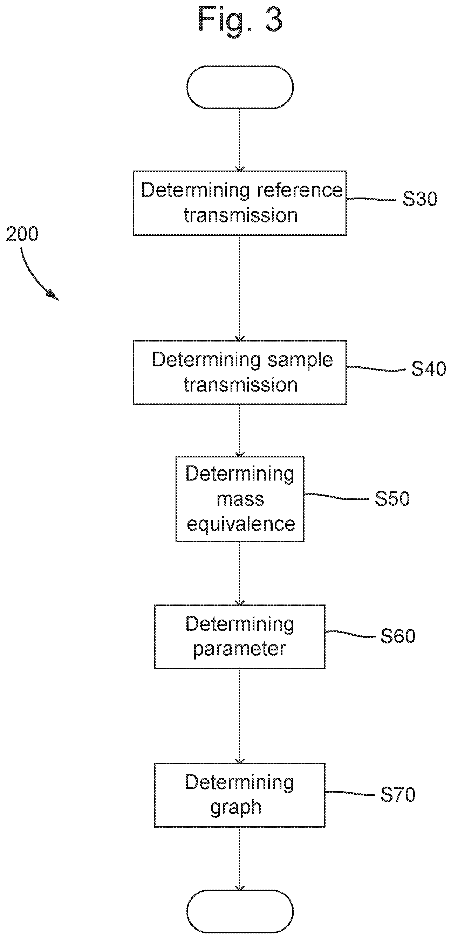

In some examples, and as illustrated in Figure 3, determining, at method 200, the equivalence data may comprise:

> determining, at S30 in a reference calibration substep, radiation transmission through a plurality of thicknesses of a reference object made of the reference material, for the at least two levels of radiation energy, detector by detector of an array of detectors configured to generate, at least partly, the inspection image of the cargo; and
> determining, at S40 in at least one sample calibration sub-step, a radiation transmission through a plurality of thicknesses of at least one sample object made of a material other than the reference material, for the at least two levels of radiation energy, detector by detector of the array of detectors configured to generate, at least partly, the inspection image of the cargo; and

determining, at S50, detector by detector based on the reference calibration sub-step at S30 and the at least one sample calibration sub-step at S40, at least one of:

> a mass equivalence $MEQ_{HE}$ of the at least one a material other than the reference material to the reference material, at a higher level of radiation energy HE of the at least two levels of radiation energy, and/or
> a mass equivalence $MEQ_{LE}$ of the at least one a material other than the reference material to the reference material, at a lower level of radiation energy LE of the at least two levels of radiation energy.

In some examples, determining the radiation transmission through a plurality of thicknesses of an object comprises irradiating with the radiation 13 stairs comprising steps of different thicknesses, e.g. of steel or any other material of interest, and detecting the transmitted radiation, detector by detector of the array 12. The determining may further involve representing the material thickness as a function of -log(transmission). Intermediate values (e.g. not corresponding to steps of the stairs) may be calculated e.g. by interpolation.

In some examples, determining the equivalence data may further comprise:
determining, at S60, a parameter $\Delta$ representative of a difference between the mass equivalence $MEQ_{HE}$ to the reference material and the mass equivalence $MEQ_{LE}$ to the reference material, such that:

$$\Delta = MEQ_{HE} - MEQ_{LE}.$$

In some examples, determining the equivalence data may further comprise:
determining, at S70, a graph G representing the parameter $\Delta$ as a function of at least one of:

> the mass equivalence $MEQ_{HE}$ at the higher level of radiation energy; and/or
> an average $\mu$ of the mass equivalence $MEQ_{HE}$ and the mass equivalence $MEQ_{LE}$, such that:

$$\mu = (MEQ_{HE} + MEQ_{LE})/2.$$

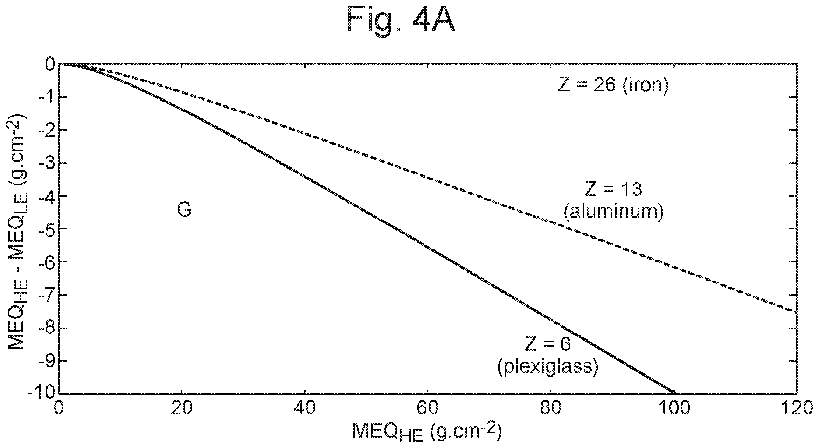

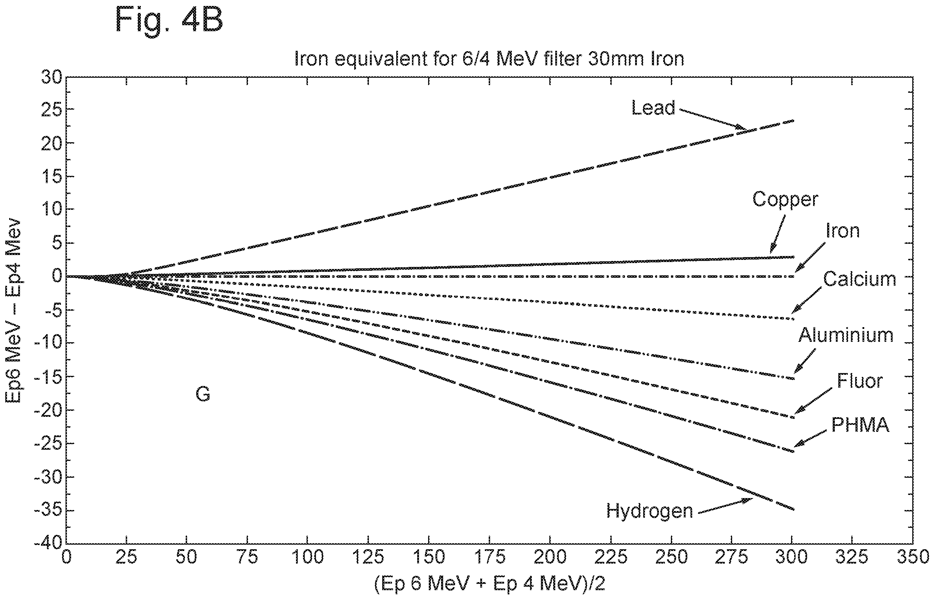

Examples of graphs G obtained during the reference calibration sub-step and/or the sample calibration sub-step are illustrated in Figures 4A and 4B.

As it is appreciated from Figures 4A and 4B, the representation of the parameter $\Delta$ with respect to the mass equivalence $MEQ_{HE}$ (Figure 4A) or the average $\mu$ (Figure 4B) is nearly linear. The linear part of the graphs will be used in methods according to the disclosure, as described further down in the present disclosure.

In Figures 4A and 4B, the reference material is steel (or iron). The horizontal line at 0 shows that steel is the reference material. For materials with an atomic number Z lower than the atomic number of steel (such as poly(methyl methacrylate) and aluminum, as non-limiting example), $\Delta$ is smaller than 0. For materials with an atomic number Z greater than the atomic number of steel (such as lead or copper as represented in Figure 4B), $\Delta$ is greater than 0.

Alternatively or additionally, obtaining the observation data, at S3, based on the image data and the equivalence data may comprise applying the obtained mass equivalence data to the reference material, to the image data.

In some examples, applying the obtained mass equivalence data to the reference material, to the image data comprises:
determining, pixel by pixel of the inspection image of the cargo, based on the obtained mass equivalence data and the image data, at least one of:

> a mass equivalence $MEQ_{HE}$ of the inspection image of the cargo to the reference material, at a higher level of radiation energy HE of the at least two levels of radiation energy, and/or
> a mass equivalence $MEQ_{LE}$ of the inspection image of the cargo to the reference material, at a lower level of radiation energy LE of the at least two levels of radiation energy.

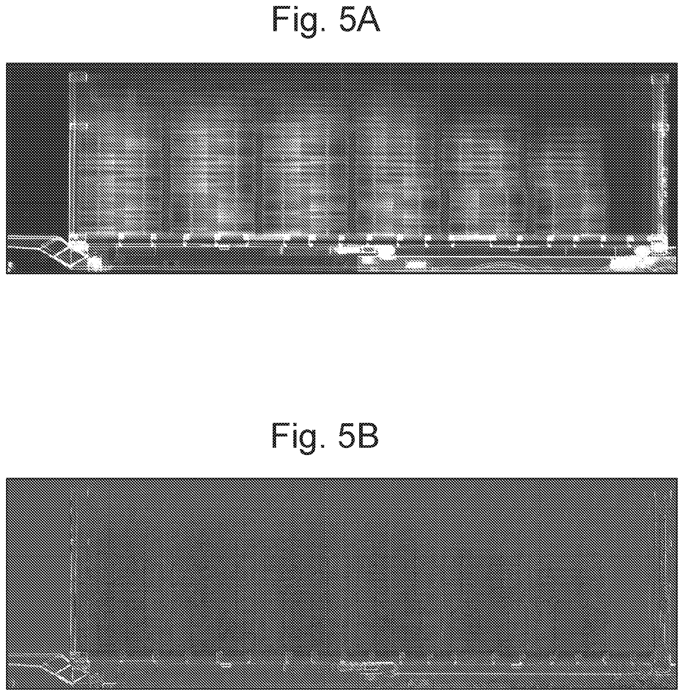

An example of an $MEQ_{HE}$ image is illustrated in Figure 5A. The $MEQ_{HE}$ image could be an interesting view for operators of the system 10, e.g. in addition to the X-ray image of the cargo.

In some examples, one of the first material or the second material may be the reference material, such that the mass equivalence is expressed with respect to the first material or the second material. In such examples, determining at S4 the at least one of the first material and the second material, based on the obtained observation data, may comprise:
determining Icorr representative of a difference between the mass equivalence $MEQ_{HE}$ to the reference material of the inspection image at the higher level of radiation energy and the mass equivalence $MEQ_{LE}$ to the reference material at the lower level of radiation energy, such that:

$$Icorr = MEQ_{HE} - MEQ_{LE}.$$

An example of Icorr is illustrated in Figure 5B.
It should be understood that steel may be removed from the image of Figure 5A to the image of Figure 5B. Given that the steel MEQ for steel is the same at low energy LE and high energy HE (see e.g. Figures 4A and 4B), most of the container wall and container roof represented in Figure 5A disappear in an image of the difference $Icorr = MEQ_{HE} - MEQ_{LE}$ as shown in Figure 5B. In Figure 5B, mostly organic materials in the cargo remain visible. The image Icorr could be an interesting view for operators, e.g. in addition to the X-ray image of the cargo.

As described below, the disclosure also enables identification of materials in one or more zones of interest where the first object overlaps the second object in the inspection image of the cargo.

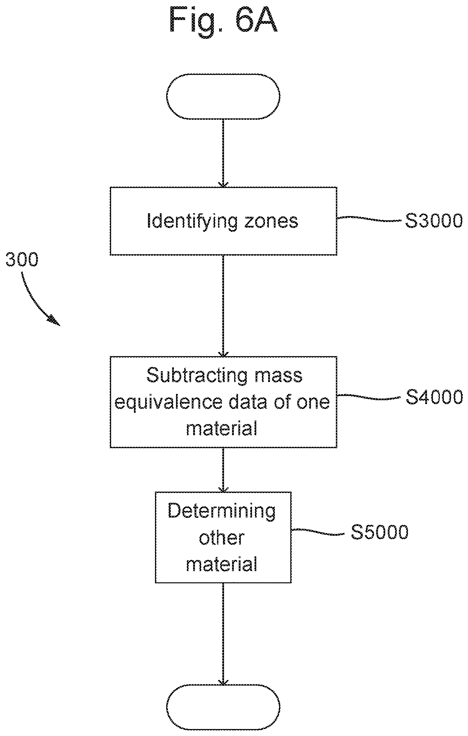

In some examples, determining at S4 the at least one of the first material and the second material, based on the obtained observation data, may comprise, as illustrated in Figure 6A with reference to method 300:

identifying, at S3000, one or more zones of interest where the first object overlaps the second object in the inspection image of the cargo, and
for at least one of the identified one or more zones of interest:

subtracting, at S4000, mass equivalence data of at least one of the first material and the second material from the obtained observation data ; and
determining, at S5000, the other one of the at least one of the first material and the second material, based on the subtracting.

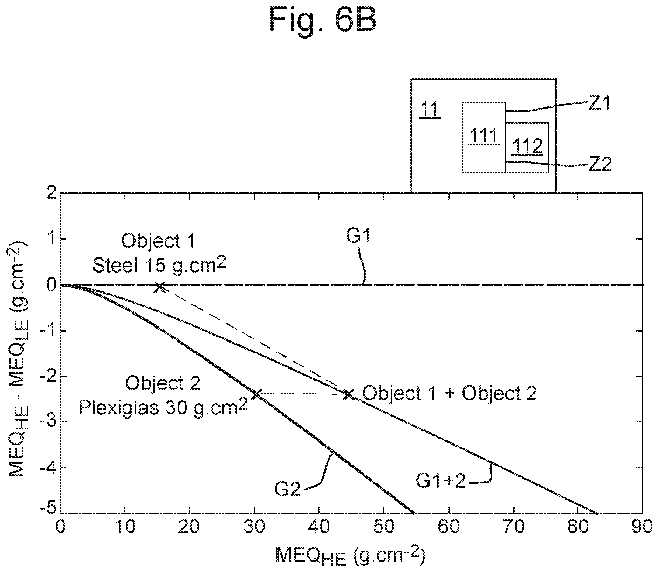

As it is appreciated from Figures 4A, 4B and 6B, the representations of the parameter $\Delta$ and/or a corresponding parameter p (described in more detail below) with respect to the mass equivalence $MEQ_{HE}$ or the average $\mu$ is nearly linear.

In some examples, subtracting at S4000 the mass equivalence data of the at least one of the first material and the second material may comprise:
subtracting the mass equivalence data of the first material, such that:

$MEQ_{HE}$ for the second material = $MEQ_{HE}$ in the identified zone - $MEQ_{HE}$ for the first material
$MEQ_{LE}$ for the second material = $MEQ_{LE}$ in the identified zone - $MEQ_{LE}$ for the first material

As illustrated in Figures 6A and 6B, in some examples, determining at S5000 the other one of the at least one of the first material and the second material, based on the subtracting at S4000 comprises:

determining the second material from a reading on the graph G (e.g. G2 in Figure 6B) representing the parameter $\Delta$, using a parameter p such that:
$p = MEQ_{LE}$ for the second material - $MEQ_{HE}$ for the second material,
p being represented a function of at least one of:

the mass equivalence $MEQ_{HE}$ for the second material at the higher level of radiation energy; and/or
an average $\mu$ of the mass equivalence $MEQ_{HE}$ and the mass equivalence $MEQ_{LE}$ for the second material, such that:

$$\mu = (MEQ_{HE} + MEQ_{LE})/2.$$

As the representative graphs of the parameter $\Delta$ (e.g. graphs G1 and G2 of Figure 6B) and/or the parameter p (e.g. graph G1+2 in Figure 6B) are nearly linear, an overlap of objects can be approximated as an addition of MEQ, as illustrated in Figure 6B. Figure 6B schematically illustrates a principle of material overlap using MEQ graphs, where the overlap (as shown on graph G1+2) of the second material of the second object Object 2 (e.g. 30g/cm$^2$ of PMMA) with the first material of the first object Object 1 (e.g. 15g/cm$^2$ of steel) may be approximated by adding, in two dimensions, 15g/cm$^2$ of steel (as shown on graph G1) to 30g/cm$^2$ of PMMA (as shown on graph G2).

As a consequence, removal of overlaps may be obtained by a subtraction. Figure 6B schematically also illustrates a principle of material subtraction using the MEQ graphs, where the second material of the second object Object 2 may be approximated (e.g. using graph G2) by subtracting, in two dimensions, 15g/cm$^2$ of steel (graph G1) to an overlap of 30g/cm$^2$ of PMMA with 15g/cm$^2$ of steel (graph G1+2).

Even though the result point (Object 2 in Figure 6B) is not exactly placed at the same position than a point corresponding to 30g/cm$^2$ of PMMA on the graph G2 corresponding to the PMMA of the brand Plexiglas (e.g. obtained during the sample calibration sub-step described above), the two points are closed enough to provide a good estimation of the second material of the second object Object 2.

As illustrated in Figures 2 and 6B, in some examples, the mass equivalence data to be subtracted from the overlapping of the first material and the second material in a zone Z2 of interest may be determined based on at least one of prior knowledge (e.g. the operator of the system 10 knows that the first material is steel) and/or knowledge extracted from a zone Z1 where the first object and/or the second object do not overlap. With reference to the example illustrated in Figures 2 and 6B, it may be determined that the first material of the first object 111 (Object 1) is steel and that the MEQ of the first object 111 (Object 1) is 15g/cm$^2$, based on knowledge (e.g. observation) extracted from the part Z1 of the image where the first object 111 (Object 1) does not overlap the second object 112 (Object 2). The 15g/cm$^2$ of steel of Object 1 may then be subtracted from the zone Z2 of interest (graph G1+2 of Figure 6B) where there is overlapping of Object 1 + Object 2, to identify Object 2 as 30g/cm$^2$ of PMMA (graph G2 of Figure 6B), using the graphs of Figure 6B as described above.

It should be understood that in the general case the subtracting of the equivalence data (e.g. the equivalence data of the first material in graph G1 of the example of Figure 6B) may be done in two dimensions, i.e. along a direction of a slope of the linear part of the graph G1 corresponding to the material to be subtracted from the overlapping in graph G1+2. The subtracting in two dimensions is due to the fact that the overlapping objects may not necessarily be made of the reference material, in the general case. In other words, in the general case the first object Object 1 may not be necessarily in steel as in the specific example of Figure 6B - the graphs of Figure 6B being expressed with steel being the material of reference. Therefore in the general case the linear part of graph G1 corresponding to Object 1 to be subtracted may not have a slope equal to 0 as in the specific example of Figure 6B.

A more detailed explanation of the principle for obtaining the graphs G of Figures 4A, 4B and 6B will now be described.

In the general case,

$$MEQ_{HE} - MEQ_{LE.} = f(Z).g(\mu)$$

Or

$$MEQ_{HE} - MEQ_{LE.} = f(Z).g(MEQ_{HE})$$

The function g may been chosen as a branch of hyperbola, with a nearly linear part:

$$g(x) = x.(ax+b)/(cx+d).$$

The parameters c and d are greater than 0, in order to avoid division by zero in our range of thicknesses. There is a degree of freedom in the values of f(Z), because it is a multiplication factor to the hyperbola, playing the same role than the ratio b/a.

With steel chosen as a reference in the examples of Figures 4A, 4B and 6B,

$$f(steel) = zero.$$

In some examples, values of f, a and b may be such that:

$$f(aluminum)=1.$$

The value of f(Z) mainly depends on the energy levels, and almost not on the detectors. Calibration may thus be simplified. For a change in energy spectrum on the system 10, recalibration during the calibration substeps may involve only the thicknesses of steel (i.e. the reference calibration sub-step) and not the whole set of steel, PMMA, aluminum and lead thicknesses (i.e. the sample calibration sub-step).

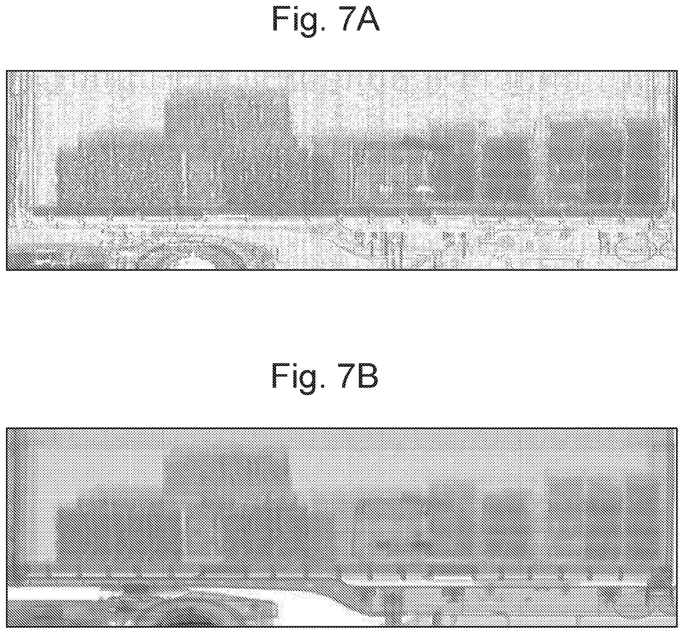

Figure 7A illustrates image $MEQ_{HE} - MEQ_{LE}$ and Figure 7B illustrates image $(MEQ_{HE} + MEQ_{LE})/2$.

The $(MEQ_{HE} + MEQ_{LE})/2$ image could be an interesting view for operators, e.g. in addition to the X-ray image of the cargo, e.g. it is less noisy than the $MEQ_{HE} - MEQ_{LE}$ image of Figure 7A.

In the examples illustrated in Figure 2, the inspection radiation source 15 may comprise an X-ray generator. The energy of the X-rays may be comprised between 100keV and 15MeV, and the dose rate may be comprised between 2mGy and 20Gy (Gray) per minute at one meter from the source. In the example illustrated by Figure 2, the maximum X-ray energy of the X-ray source 15 may be e.g., between 100keV and 9.0MeV, typically e.g., 2MeV, 3.5MeV, 4MeV, or 6MeV, for a steel penetration capacity e.g., between 40mm to 400mm, typically e.g., 300mm (12in). In the example illustrated by Figure 2, the dose may be e.g., between 20mGy and 120mGy. In other examples, the maximum x-ray energy of the X-ray source 15 may be e.g., between 4MeV and 10MeV, typically e.g., 9MeV, for a steel penetration capacity e.g., between 300mm to 450mm, typically e.g., 410mm (16.1in). In some examples, the dose may be 17Gy.

The system 10 may further comprise other types of detectors, such as optional gamma and/or neutrons detectors, e.g., adapted to detect the presence of radioactive gamma and/or neutrons emitting materials within the cargo 11, e.g., simultaneously to the X-ray inspection.

## Claims

1. A computer-implemented method (100) for determining a material in a cargo (11), the cargo comprising a first object (111) made of a first material and a second object (112) made of a second material, the method comprising:

   obtaining (S1) image data associated with an inspection image of the cargo, for at least two levels (HE, LE) of radiation energy, wherein the image data has been generated using an inspection system comprising a radiation source and a radiation detector array, by transmission of inspection radiation from the radiation source to the radiation detector array through the cargo;
   obtaining (S2) equivalence data associated with mass equivalence of at least one of the first material and the second material with respect to a reference material, for the at least two levels of radiation energy, wherein the mass equivalence of a given material with respect to the reference material corresponds to a thickness of an object made of the reference material, associated with a same radiation transmission, in the inspection image, as a radiation transmission associated with a thickness of an object made of the given material;

obtaining (S3) observation data based on the image data and the equivalence data, wherein obtaining the observation data based on the image data and the equivalence data comprises applying the obtained mass equivalence data with respect to the reference material, to the image data; and

determining (S4) at least one of the first material and the second material, based on the obtained observation data, comprising:

identifying one or more zones (S3000) of interest where the first object overlaps the second object in the inspection image of the cargo, and

for at least one of the identified one or more zones of interest:

subtracting (S4000) mass equivalence data of at least one of the first material and the second material from the obtained observation data; and

determining (S5000) the other one of the at least one of the first material and the second material, based on the subtracting,

**characterized in that**

the mass equivalence data to be subtracted from the overlapping of the first material and the second material in the zone of interest is determined based on knowledge extracted from a zone where the first object and the second object do not overlap.

2. The method (100) of claim 1, wherein, for an object made of a material other than the reference material, the mass equivalence with respect to the reference material depends on radiation energy.

3. The method (100) of claim 1 or 2, wherein the mass equivalence is expressed in $g.cm^{-2}$.

4. The method (100) of any one of claims 1 to 3, wherein

the reference material being metallic, the mass equivalence MEQ to the reference material is associated with metallic MEQ, such as iron MEQ, steel MEQ, lead MEQ or aluminium MEQ, and/or

the reference material being organic, the mass equivalence MEQ to the reference material is associated with organic MEQ, such as poly(methyl methacrylate) MEQ.

5. The method (100) of any one of claims 1 to 4, wherein obtaining the equivalence data comprises at least one of:

receiving the equivalence data from a calibration step; and/or

determining (200) the equivalence data during a calibration step.

6. The method (100) of claim 5, wherein determining (200) the equivalence data comprises:

determining (S30), in a reference calibration sub-step, radiation transmission through a plurality of thicknesses of a reference object made of the reference material, for the at least two levels of radiation energy, detector by detector of an array of detectors configured to generate, at least partly, the inspection image of the cargo; and

determining (S40), in at least one sample calibration sub-step, a radiation transmission through a plurality of thicknesses of at least one sample object made of a material other than the reference material, for the at least two levels of radiation energy, detector by detector of the array of detectors configured to generate, at least partly, the inspection image of the cargo; and

determining (S50), detector by detector based on the reference calibration sub-step and the at least one sample calibration sub-step, at least one of:

a mass equivalence $MEQ_{HE}$ of the at least one a material other than the reference material to the reference material, at a higher level of radiation energy HE of the at least two levels of radiation energy, and/or

a mass equivalence $MEQ_{LE}$ of the at least one a material other than the reference material to the reference material, at a lower level of radiation energy LE of the at least two levels of radiation energy.

7. The method (100) of claim 6, wherein determining the equivalence data further comprises:

determining (S60) a parameter $\Delta$ representative of a difference between the mass equivalence $MEQ_{HE}$ to the reference material and the mass equivalence $MEQ_{LE}$ to the reference material, such that:

$$\Delta = MEQ_{HE} - MEQ_{LE}$$

and

determining (S70) a graph G representing the parameter $\Delta$ as a function of at least one of:

the mass equivalence $MEQ_{HE}$ at the higher level of radiation energy; and/or
an average $\mu$ of the mass equivalence $MEQ_{HE}$ and the mass equivalence $MEQ_{LE}$, such that:

$$\mu = (MEQ_{HE} + MEQ_{LE})/2.$$

8. The method (100) of any one of claims 1 to 7, wherein applying the obtained mass equivalence data to the image data comprises:
determining, pixel by pixel of the inspection image of the cargo, based on the obtained mass equivalence data and the image data, at least one of:

a mass equivalence $MEQ_{HE}$ of the inspection image of the cargo to the reference material, at a higher level of radiation energy HE of the at least two levels of radiation energy, and/or
a mass equivalence $MEQ_{LE}$ of the inspection image of the cargo to the reference material, at a lower level of radiation energy LE of the at least two levels of radiation energy.

9. The method (100) of claim 8, wherein one of the first material or the second material is the reference material, and
wherein determining the at least one of the first material and the second material, based on the obtained observation data, comprises:
determining Icorr representative of a difference between the mass equivalence $MEQ_{HE}$ to the reference material of the inspection image at the higher level of radiation energy and the mass equivalence $MEQ_{LE}$ to the reference material at the lower level of radiation energy, such that:

$$Icorr = MEQ_{HE} - MEQ_{LE}.$$

10. The method (100) of claim 8 or 9, wherein subtracting the mass equivalence data of the at least one of the first material and the second material comprises:
subtracting the mass equivalence data of the first material, such that:

$MEQ_{HE}$ for the second material = $MEQ_{HE}$ in the identified zone - $MEQ_{HE}$ for the first material
$MEQ_{LE}$ for the second material = $MEQ_{LE}$ in the identified zone - $MEQ_{LE}$ for the first material

11. The method (100) of claim 10 when dependent on claim 7, wherein determining the other one of the at least one of the first material and the second material, based on the subtracting comprises:

determining the second material from a reading on the graph G representing the parameter $\Delta$, using a parameter p such that:
p = $MEQ_{LE}$ for the second material - $MEQ_{HE}$ for the second material,
p being represented a function of at least one of:

the mass equivalence $MEQ_{HE}$ for the second material at the higher level of radiation energy; and/or
an average $\mu$ of the mass equivalence $MEQ_{HE}$ and the mass equivalence $MEQ_{LE}$ for the second material, such that:

$$\mu = (MEQ_{HE} + MEQ_{LE})/2,$$

optionally wherein subtracting comprises:
subtracting the equivalence data along a direction of a slope of a linear part of a graph corresponding to the material to be subtracted from the overlapping of the first object and the second object.

12. The method (100) of claim 10 or 11, wherein the mass equivalence data to be subtracted from the overlapping of the first material and the second material in the zone of interest is further determined based on prior knowledge.

13. Apparatus (16, 17) comprising:

at least a processor, and
a memory,
wherein the memory comprises instructions which, when executed by the processor, enable the processor to perform the method (100) according to any one of claims 1 to 12.

14. A computer program or a computer program product, comprising instructions which, when executed by a processor, enable the processor to perform a method (100) according to any one of claims 1 to 12.

**Patentansprüche**

1. Computerimplementiertes Verfahren (100) zum Bestimmen eines Materials in einer Fracht (11), wobei die Fracht ein erstes Objekt (111) umfasst, das aus einem ersten Material besteht, und ein zweites Objekt (112), das aus einem zweiten Material besteht, wobei das Verfahren Folgendes umfasst:

Erhalten (S1) von Bilddaten, die einem Inspektionsbild der Fracht zugeordnet sind, für mindestens zwei Pegel (HE, LE) von Strahlungsenergie,

wobei die Bilddaten mit Hilfe eines Inspektionssystems generiert wurden, das eine Strahlungsquelle und eine Strahlungsdetektoranordnung umfasst, indem Untersuchungsstrahlung von der Strahlungsquelle durch die Fracht zu der Strahlungsdetektoranordnung übertragen wird; Erhalten (S2) von Äquivalenzdaten, die einer Masseäquivalenz von mindestens einem des ersten Materials und des zweiten Materials in Bezug auf ein Referenzmaterial zugeordnet sind, für die mindestens zwei Pegel von Strahlungsenergie,

wobei die Masseäquivalenz eines gegebenen Materials in Bezug auf das Referenzmaterial einer Dicke eines aus dem Referenzmaterial bestehenden Objekts entspricht, die einer gleichen Strahlungsübertragung in dem Inspektionsbild zugeordnet ist wie eine Strahlungsübertragung, die einer Dicke eines aus dem gegebenen Material bestehenden Objekts zugeordnet ist;

Erhalten (S3) von Beobachtungsdaten basierend auf den Bilddaten und den Äquivalenzdaten, wobei das Erhalten der Beobachtungsdaten basierend auf den Bilddaten und den Äquivalenzdaten das Anwenden der erhaltenen Masseäquivalenzdaten in Bezug auf das Regerenzmaterial auf die Bilddaten umfasst; und

Bestimmen (S4) mindestens eines des ersten Materials und des zweiten Materials basierend auf den erhaltenen Beobachtungsdaten, Folgendes umfassend:

Identifizieren einer oder mehrerer Zonen (S3000) von Interesse, wo das erste Objekt das zweite Objekt in dem Inspektionsbild der Fracht überlagert, und

für mindestens eine der identifizierten einen oder mehreren Zonen von Interesse:

Subtrahieren (S4000) der Masseäquivalenzdaten von mindestens einem des ersten Materials und des zweiten Materials von den erhaltenen Beobachtungsdaten; und

Bestimmen (S5000) des anderen des mindestens einen des ersten Materials und des zweiten Materials, basierend auf der Subtraktion,

**dadurch gekennzeichnet, dass** die Masseäquivalenzdaten, die von der Überlagerung des ersten Materials und des zweiten Materials in der Zone von Interesse zu subtrahieren sind, basierend auf Wissen bestimmt werden, das aus einer Zone extrahiert wird, wo das erste Objekt und das zweite Objekt einander nicht überlagern.

2. Verfahren (100) nach Anspruch 1, wobei für ein Objekt, das aus einem anderen Material besteht als das Referenzmaterial, die Masseäquivalenz in Bezug auf das Referenzmaterial von der Strahlungsenergie abhängt.

3. Verfahren (100) nach Anspruch 1 oder 2, wobei die Masseäquivalenz in $g.cm^{-2}$ ausgedrückt wird.

4. Verfahren (100) nach einem der Ansprüche 1 bis 3, wobei

wenn das Referenzmaterial metallisch ist, der Masseäquivalenz MEQ zu dem Referenzmaterial eine Metall-MEQ zugeordnet ist, wie beispielsweise Eisen-MEQ, Stahl-MEQ, Blei-MEQ oder Aluminium-MEQ, und/oder

wenn das Referenzmaterial organisch ist, der Masseäquivalenz MEQ zu dem Referenzmaterial eine organische MEQ zugeordnet ist, wie beispielsweise Poly(methylmethacrylat)-MEG.

5. Verfahren (100) nach einem der Ansprüche 1 bis 4, wobei das Erhalten der Äquivalenzdaten mindestens eines des Folgenden umfasst:

Empfangen der Äquivalenzdaten aus einem Kalibrierungsschritt; und/ oder

Bestimmen (200) der Äquivalenzdaten während eines Kalibrierungsschritts.

6. Verfahren (100) nach Anspruch 5, wobei das Bestimmen (200) der Äquivalenzdaten Folgendes umfasst:

Bestimmen (S30), in einem Referenzkalibrierungs-Teilschritt, einer Strahlungsübertragung durch mehrere Dicken eines Referenzobjekts, das aus dem Referenzmaterial besteht, für die mindestens zwei Pegel der Strahlungsenergie, Detektor für Detektor einer Detektoranordnung, die dafür konfiguriert ist, das Inspektionsbild der Fracht zumindest teilweise zu erzeugen; und

Bestimmen (S40), in mindestens einem Probenkalibrierungs-Teilschritt, einer Strahlungsübertragung durch mehrere Dicken mindestens eines Probenobjekts, das aus einem anderen Material als das Referenzmaterial besteht, für die mindestens zwei Pegel der Strahlungsenergie, Detektor für Detektor der Detektoranordnung, die dafür konfiguriert ist, das Inspektionsbild der Fracht zumindest teilweise zu erzeugen; und

Bestimmen (S50), Detektor für Detektor basierend auf dem Referenzkalibrierungs-Teilschritt und dem mindestens einen Probenkalibrierungs-Teilschritt, mindestens eines des Folgenden:

eine Masseäquivalenz $MEQ_{HE}$ des mindestens einen anderen Materials als das Referenzmaterial zu dem Referenzmaterial bei einem höheren Pegel der Strahlungsenergie HE der mindestens zwei Pegel der Strahlungsenergie, und/oder

eine Masseäquivalenz $MEQ_{LE}$ des mindestens einen anderen Materials als das Referenzmaterial zu dem Referenzmaterial bei einem niedrigeren Pegel der Strahlungsenergie LE der mindestens zwei Pegel der Strahlungsenergie.

7. Verfahren (100) nach Anspruch 6, wobei das Bestimmen der Äquivalenzdaten ferner Folgendes umfasst:

Bestimmen (S60) eines Parameters $\Delta$, der eine Differenz zwischen der Masseäquivalenz $MEQ_{HE}$ zu dem Referenzmaterial und der Masseäquivalenz $MEQ_{LE}$ zu dem Referenzmaterial darstellt, sodass:

$$\Delta = \mathrm{MEQ_{HE}} - \mathrm{MEQ_{LE}}$$

und

Bestimmen (S70) einer Kurve G, die den Parameter $\Delta$ als eine Funktion von mindestens einem des Folgenden darstellt:

der Masseäquivalenz $MEQ_{HE}$ bei einem höheren Pegel der Strahlungsenergie; und/oder

einem Durchschnitt $\mu$ der Masseäquivalenz $MEQ_{HE}$ und der Masseäquivalenz $MEQ_{LE}$, sodass

$$\mu = (\mathrm{MEQ_{HE}} - \mathrm{MEQ_{LE}})/2.$$

8. Verfahren (100) nach einem der Ansprüche 1 bis 7, wobei das Anwenden der Masseäquivalenzdaten auf die Bilddaten Folgendes umfasst:
Bestimmen, Pixel für Pixel des Inspektionsbildes der Fracht, basierend auf den erhaltenen Masseäquivalenzdaten und den Bilddaten, mindestens eines des Folgenden:

einer Masseäquivalenz $MEQ_{HE}$ des Inspektionsbildes der Fracht zu dem Referenzmaterial bei einem höheren Pegel der Strahlungsenergie HE der mindestens zwei Pegel der Strahlungsenergie, und/oder

einer Masseäquivalenz $MEQ_{LE}$ des Inspektionsbildes der Fracht zu dem Referenzmaterial bei einem niedrigeren Pegel der Strahlungsenergie LE der mindestens zwei Pegel der Strahlungsenergie.

9. Verfahren (100) nach Anspruch 8, wobei eines des ersten Materials und des zweiten Materials das Referenzmaterial ist, und

wobei das Bestimmen des mindestens einen des ersten Materials und des zweiten Materials basierend auf den erhaltenen Beobachtungsdaten Folgendes umfasst:
Bestimmen von Ikorr, das eine Differenz zwischen der Masseäquivalenz $MEQ_{HE}$ zu dem Referenzmaterial des Inspektionsbildes bei dem höheren Pegel der Strahlungsenergie und der Masseäquivalenz $MEQ_{LE}$ zu dem Referenzmaterial des Inspektionsbildes bei dem niedrigeren Pegel der Strahlungsenergie darstellt, sodass:

$$Ikorr = (\mathrm{MEQ_{HE}} - \mathrm{MEQ_{LE}}).$$

10. Verfahren (100) nach Anspruch 8 oder 9, wobei das Subtrahieren der Masseäquivalenzdaten des mindestens einen des ersten und des zweiten Materials Folgendes umfasst:
Subtrahieren der Masseäquivalenzdaten des ersten Materials, sodass:

$MEQ_{HE}$ für das zweite Materials = $MEQ_{HE}$ in der identifizierten Zone - $MEQ_{HE}$ für das erste Material
$MEQ_{LE}$ für das zweite Materials = $MEQ_{LE}$ in der identifizierten Zone - $MEQ_{LE}$ für das erste Material

11. Verfahren (100) nach Anspruch 10, wenn abhängig von Anspruch 7, wobei das Bestimmen des anderen des mindestens einen des ersten Materials und des zweiten Materials, basierend auf dem Subtrahieren, Folgendes umfasst:

Bestimmen des zweiten Materials aus einer Auslesung der Kurve G, die den Parameter $\Delta$ darstellt, mit Hilfe eines Parameters p, sodass:
p = $MEQ_{LE}$ für das zweite Material - $MEQ_{HE}$ für das zweite Material, wobei p durch eine Funktion von mindestens einem des Folgenden dargestellt ist:
der Masseäquivalenz $MEQ_{HE}$ für das zweite Material bei dem höheren Pegel der Strahlungsenergie; und/oder
einem Durchschnitt $\mu$ der Masseäquivalenz $MEQ_{HE}$ und der Masseäquivalenz $MEQ_{LE}$ für das zweite Material, sodass:

$$\mu = (\mathrm{MEQ_{HE}} - \mathrm{MEQ_{LE}})/2,$$

wobei das Subtrahieren optional Folgendes umfasst:
Subtrahieren der Äquivalenzdaten entlang einer Richtung einer Steigung eines linearen Teils einer Kurve, die dem Material entspricht, das von der Überlagerung des ersten Objekts und des zweiten Objekts zu subtrahieren ist.

12. Verfahren (100) nach Anspruch 10 oder 11, wobei die Masseäquivalenzdaten, die von der Überlagerung des ersten Materials und des zweiten Materials in der Zone von Interesse zu subtrahieren sind, ferner basierend auf vorherigem Wissen bestimmt werden.

13. Vorrichtung (16, 17), Folgendes umfassend:

mindestens einen Prozessor; und einen Speicher, wobei der Speicher Anweisungen umfasst, die bei Ausführung durch den Prozessor den Prozessor in die Lage versetzen, das Verfahren (100) nach einem der Ansprüche 1 bis 12 durchzuführen.

14. Computerprogramm oder Computerprogrammprodukt, Anweisungen umfassend, die bei Ausführung durch den Prozessor den Prozessor in die Lage versetzen, das Verfahren (100) nach einem der Ansprüche 1 bis 12 durchzuführen.

**Revendications**

1. Procédé mis en œuvre par ordinateur (100) pour déterminer un matériau dans une cargaison (11), la cargaison comprenant un premier objet (111) constitué d'un premier matériau et un second objet (112) constitué d'un second matériau, le procédé consistant à :

obtenir (S1) des données d'image associées à une image d'inspection de la cargaison, pour au moins deux niveaux (HE, LE) d'énergie de rayonnement, les données d'image ayant été générées au moyen d'un système d'inspection comprenant une source de rayonnement et un réseau de détecteurs de rayonnement, par émission d'un rayonnement d'inspection depuis la source de rayonnement vers le réseau de détecteurs de rayonnement à travers la cargaison ; obtenir (S2) des données d'équivalence associées à une équivalence de masse d'au moins un matériau parmi le premier matériau et le second matériau par rapport à un matériau de référence, pour les au moins deux niveaux d'énergie de rayonnement, l'équivalence de masse d'un matériau donné par rapport au matériau de référence correspondant à une épaisseur d'un objet constitué du matériau de référence, associée à une même émission de rayonnement, sur l'image d'inspection, qu'une émission de rayonnement associée à une épaisseur d'un objet constitué du matériau donné ; obtenir (S3) des données d'observation sur la base des données d'image et des données d'équivalence, l'obtention des données d'observation sur la base des données d'image et des données d'équivalence consistant à appliquer aux données d'image les données d'équivalence de masse obtenues par rapport au matériau de référence ; et déterminer (S4) au moins un matériau parmi le premier matériau et le second matériau, sur la base des données d'observation obtenues, ce qui consiste à :

identifier une ou plusieurs zones (S3000) d'intérêt où le premier objet chevauche le second objet sur l'image d'inspection de la cargaison, et pour au moins l'une de la ou des zones d'intérêt identifiées :

soustraire (S4000), des données d'observation obtenues, des données d'équivalence de masse d'au moins un matériau parmi le premier matériau et le second matériau ; et déterminer (S5000) l'autre matériau parmi l'au moins un matériau parmi le premier matériau et le second matériau, sur la base de la soustraction,

le procédé étant **caractérisé en ce que** les données d'équivalence de masse à soustraire du chevauchement du premier matériau et du second matériau dans la zone d'intérêt sont déterminées sur la base de connaissances extraites d'une zone où le premier objet et le second objet ne se chevauchent pas.

2. Procédé (100) selon la revendication 1, pour un objet constitué d'un matériau autre que le matériau de référence l'équivalence de masse par rapport au matériau de référence dépendant de l'énergie de rayonnement.

3. Procédé (100) selon la revendication 1 ou 2, l'équivalence de masse étant exprimée en $g.cm^{-2}$.

4. Procédé (100) selon l'une quelconque des revendications 1 à 3,

le matériau de référence étant métallique, l'équivalence de masse MEQ par rapport au matériau de référence étant associée à une MEQ métallique, telle qu'une MEQ de fer, une MEQ d'acier, une MEQ de plomb ou une MEQ d'aluminium, et/ou

le matériau de référence étant organique, l'équivalence de masse MEQ par rapport au matériau de référence étant associée à une MEQ organique, telle qu'une MEQ de poly(méthacrylate de méthyle).

5. Procédé (100) selon l'une quelconque des revendications 1 à 4, l'obtention des données d'équivalence comprenant au moins une des étapes suivantes consistant à :

recevoir les données d'équivalence en provenance d'une étape d'étalonnage ; et/ou déterminer (200) les données d'équivalence pendant une étape d'étalonnage.

6. Procédé (100) selon la revendication 5, la détermination (200) des données d'équivalence consistant à :

déterminer (S30), au cours d'une sous-étape d'étalonnage de référence, une émission de rayonnement à travers une pluralité d'épaisseurs d'un objet de référence constitué du matériau de référence, pour les au moins deux niveaux d'énergie de rayonnement, détecteur par détecteur d'un réseau de détecteurs configuré pour générer, au moins en partie, l'image d'inspection de la cargaison ; et

déterminer (S40), au cours d'au moins une sous-étape d'étalonnage d'échantillon, une émission de rayonnement à travers une pluralité d'épaisseurs d'au moins un objet échantillon constitué d'un matériau autre que le matériau de référence, pour les au moins deux niveaux d'énergie de rayonnement, détecteur par détecteur du réseau de détecteurs configuré pour générer, au moins en partie, l'image d'inspection de la cargaison ; et

déterminer (S50), détecteur par détecteur sur la base de la sous-étape d'étalonnage de référence et de l'au moins une sous-étape d'étalonnage d'échantillon, au moins une équivalence de masse parmi :

une équivalence de masse $MEQ_{HE}$ de l'au moins un matériau autre que le matériau de référence par rapport au matériau de référence, à un niveau supérieur d'énergie de rayonnement HE parmi les au moins deux niveaux d'énergie de rayonnement, et/ou une équivalence de masse $MEQ_{LE}$ de l'au moins un matériau autre que le matériau de référence par rapport au matériau de référence, à un niveau inférieur d'énergie de rayonnement LE parmi les au moins deux niveaux d'énergie de rayonnement.

7. Procédé (100) selon la revendication 6, la détermination des données d'équivalence consistant en outre à :

déterminer (S60) un paramètre $\Delta$ représentatif d'une différence entre l'équivalence de masse $MEQ_{HE}$ par rapport au matériau de référence et l'équivalence de masse $MEQ_{LE}$ par rapport au matériau de référence, de telle sorte que :

$$\Delta = MEQ_{HE} - MEQ_{LE}$$

et

déterminer (S70) un graphique G représentant le paramètre $\Delta$ en fonction d'au moins un élément parmi :

l'équivalence de masse $MEQ_{HE}$ au niveau supérieur d'énergie de rayonnement ; et/ou une moyenne $\mu$ de l'équivalence de masse $MEQ_{HE}$ et de l'équivalence de masse $MEQ_{LE}$, de telle sorte que :

$$\mu = (MEQ_{HE} - MEQ_{LE})/2.$$

8. Procédé (100) selon l'une quelconque des revendications 1 à 7, l'application des données d'équivalence de masse obtenues aux données d'image consistant à :

déterminer, pixel par pixel de l'image d'inspection de la cargaison, sur la base des données d'équivalence de masse obtenues et des données d'image, au moins une équivalence de masse parmi :

une équivalence de masse $MEQ_{HE}$ de l'image d'inspection de l'image de la cargaison par rapport au matériau de référence, à un niveau supérieur d'énergie de rayonnement HE parmi les au moins deux niveaux d'énergie de rayonnement, et/ou une équivalence de masse $MEQ_{LE}$ de l'image d'inspection de la cargaison par rapport au matériau de référence, à un niveau inférieur d'énergie de rayonnement LE parmi les au moins deux niveaux d'énergie de rayonnement.

9. Procédé (100) selon la revendication 8, un matériau parmi le premier matériau et le second matériau étant le matériau de référence, et

la détermination de l'au moins un matériau parmi le premier matériau et le second matériau, sur la base des données d'observation obtenues, consistant à : déterminer la valeur Icorr représentative d'une différence entre l'équivalence de masse $MEQ_{HE}$ par rapport au matériau de référence de l'image d'inspection au niveau supérieur d'énergie de rayonnement et l'équivalence de masse MEQ<sub>LE</sub> par rapport au matériau de référence au niveau inférieur d'énergie de rayonnement, de telle sorte que :

$$Icorr = (MEQ_{HE} - MEQ_{LE}).$$

10. Procédé (100) selon la revendication 8 ou 9, la soustraction des données d'équivalence de masse de l'au moins un matériau parmi le premier matériau et le second matériau consistant à :
soustraire les données d'équivalence de masse du premier matériau, de telle sorte que :

MEQ<sub>HE</sub> pour le second matériau = MEQ<sub>HE</sub> dans la zone identifiée - MEQ<sub>HE</sub> pour le premier matériau
MEQ<sub>LE</sub> pour le second matériau = MEQ<sub>LE</sub> dans la zone identifiée - MEQ<sub>LE</sub> pour le premier matériau

11. Procédé (100) selon la revendication 10 lorsqu'elle dépend de la revendication 7, la détermination de l'autre matériau parmi l'au moins un matériau parmi le premier matériau et le second matériau, sur la base de la soustraction, consistant à :

déterminer le second matériau à partir d'une lecture sur le graphique G représentant le paramètre Δ, au moyen d'un paramètre p de telle sorte que :
p = MEQ<sub>LE</sub> pour le second matériau - MEQ<sub>HE</sub> pour le second matériau, p étant représenté en fonction d'au moins un élément parmi :
l'équivalence de masse MEQ<sub>HE</sub> pour le second matériau au niveau supérieur d'énergie de rayonnement ; et/ou
une moyenne μ de l'équivalence de masse MEQ<sub>HE</sub> et de l'équivalence de masse MEQ<sub>LE</sub> pour le second matériau, de telle sorte que :

$$\mu = (MEQ_{HE} - MEQ_{LE})/2,$$

la soustraction consistant éventuellement à :
soustraire les données d'équivalence le long d'une direction d'une pente d'une partie linéaire d'un graphique correspondant au matériau à soustraire du chevauchement du premier objet et du second objet.

12. Procédé (100) selon la revendication 10 ou 11, les données d'équivalence de masse à soustraire du chevauchement du premier matériau et du second matériau dans la zone d'intérêt étant en outre déterminées sur la base de connaissances préalables.

13. Appareil (16, 17) comprenant :

au moins un processeur ; et
une mémoire,
la mémoire comprenant des instructions qui, lorsqu'elles sont exécutées par le processeur, permettent au processeur de réaliser le procédé (100) selon l'une quelconque des revendications 1 à 12.

14. Programme informatique ou produit-programme informatique comprenant des instructions qui, lorsqu'elles sont exécutées par un processeur, permettent au processeur de réaliser un procédé (100) selon l'une quelconque des revendications 1 à 12.

# Fig. 1

100

Obtaining
image data — S1

Obtaining
equivalence
data — S2

Obtaining
observation
data — S3

Determining
material — S4

# Fig. 2

# Fig. 3

# Fig. 4A

Fig. 4B

## Fig. 5A

## Fig. 5B

# Fig. 6A

# Fig. 6B

## Fig. 7A

## Fig. 7B

**EP 3 861 380 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170336526 A
- US 20170023697 A
- WO 2017192597 A